(19) Europäisches Patentamt
European Patent Office
Office européen des brevets

(11) EP 3 842 131 A1

(12) # EUROPEAN PATENT APPLICATION

(43) Date of publication:
**30.06.2021 Bulletin 2021/26**

(21) Application number: **19219301.9**

(22) Date of filing: **23.12.2019**

(51) Int Cl.:
***B01D 67/00*** *(2006.01)* ***B01D 69/02*** *(2006.01)*
***B01D 71/68*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **3M Innovative Properties Company**
**Saint Paul, MN 55133-3427 (US)**

(72) Inventors:
- **Bourgeois, Pierre-Alexandre**
  **45131 Essen (DE)**
- **Frost, Sven**
  **45131 Essen (DE)**
- **Audenaert, Frans**
  **9970 Kaprijke (BE)**
- **Opstal, Tom**
  **9270 Kalken (BE)**
- **Grau, Uwe**
  **40705 Hilden (DE)**

(74) Representative: **Vossius & Partner**
**Patentanwälte Rechtsanwälte mbB**
**P.O. Box 86 07 67**
**81634 München (DE)**

(54) **FLUORINATED SILANE SURFACE MODIFIED POLYETHERSULFONE MEMBRANES AND METHOD OF MAKING THEREOF**

(57) The present disclosure relates to hydrophilic microporous membranes comprising a modified surface. In addition, the present disclosure relates to a process for producing such hydrophilic membranes by modification of microporous membranes with fluorinated organosilane compounds and electron beam irradiation.

EP 3 842 131 A1

## Description

### Field

The present disclosure relates to hydrophilic microporous membranes comprising a modified surface. In addition, the present disclosure relates to a process for producing such hydrophilic membranes by modification of microporous membranes with fluorinated organosilane compounds and electron beam irradiation. The present disclosure further relates to use of the modified membranes for filtration purposes or as a barrier to remove particles and microorganisms from liquids and gases.

### Background

Polymeric membranes such as aromatic polysulfones are widely used in industry as base material for micro- and ultrafiltration materials. In certain applications, it is desirable that the surface of the membranes is hydrophilic. For example, it may be desirable to obtain a low protein binding tendency. This may be the case in pharmaceutical applications such as filtration of media in biopharmaceutical processes where protein-containing solutions are processed.

In exemplary processes known in the art, the hydrophobic polyethersulfone (PES) is blended with hydrophilic polymers like polyvinylpyrrolidone (PVP), polyethyleneglycol (PEG) and sulfonated polyethersulfone (SPES) to render the membrane surface hydrophilic. However, leaching of the hydrophilic polymers out of the polymer matrix may lead to a decrease of the membrane hydrophilicity over time as well as to a contamination of the permeate stream. Accordingly, the scope and duration of the application of a certain membrane may be limited. On the one hand, this is relevant for applications where contamination of the filtrate with polymer compounds is generally undesired, which is particularly true for pharmaceutical processes. On the other hand, long-term hydrophilicity and thus high protein resistance is required to minimize the loss of target proteins (such as monoclonal antibodies), e.g. during the purification of biopharmaceuticals (e.g. sterile filtration).

Various efforts to fix hydrophilic polymers into a hydrophobic polymer matrix (such as a PES matrix) have been published. Similarly, it has been also tried to modify the PES membrane surface to obtain a certain hydrophilicity. For example, US 9,045,602 B2 discloses a method for producing a microporous membrane wherein a polymer is fixed by means of irradiation with an E-beam onto the surface of the membrane. This membrane is described as intended to be used in hemodialysis, virus filtration and sterile filtration.

US 5,468,390 describes the modification of an aryl polysulfone membrane using a photo-grafting process without the use of a photoinitiator. The membrane is UV-irradiated for a certain time at wavelengths of about 254 nm in the presence of hydrophilic vinyl monomers.

Similarly, US 6,852,769 B2 discloses a method to modify a polymeric photoactive sulfone membrane in an attempt to reduce protein fouling. The method comprises dipping the sulfone membrane into a solution containing hydrophilic monomers and a chain transfer agent and exposing the membrane to UV radiation in the presence of a filter.

However, there is a desire for membranes being more hydrophobic than common PES membranes. With respect to PES membranes, hydrophobic and oleophobic PES membranes have been developed to combine high air flow rates with reliable liquid repelling properties. This may be very desirable for use as barriers against contamination from particles, aerosols, microorganisms and other undesirable substances, for instance, in medical or pharmaceutical applications. It is in these applications, devices, substances and membranes oftentimes need to be sterilized. Common sterilization procedures involve the application of elevated temperatures in combination with water vapour and pressure, such as in autoclaves, or the irradiation with gamma rays. Therefore, membranes made from chemically inert and robust materials are used. For example, membranes made from perfluorinated polymers such as PTFE find widespread application. While the perfluorinated polymer membranes meet the aforementioned requirements, they have the disadvantage of being much more expensive than common non-fluorinated polymer membranes such as PES membranes. Also, environmental concerns regarding the manufacture and use of perfluorinated polymers may be cited.

Therefore, and without wanting to diminish the efforts known from the prior art, there still exists a need for hydrophobic, chemically inert and robust membranes, and which ideally bear the properties of perfluorinated polymers such as being sterilizable by common protocols. Particularly desirable are such membranes for biopharmaceutical and medical applications, and/or for applications in gas filters and venting. There also exists a need for an efficient process for producing such membranes.

### Summary

The present disclosure provides a polymeric microporous membrane, comprising a modified surface obtained from coating with at least one fluorinated organosilane compound.

The present disclosure further provides a process for producing a surface-modified polymeric membrane,

comprising the following steps:

(I) Providing a polymeric membrane;
(II) Applying a solution comprising at least one fluorinated organosilane compound as described herein to the polymeric membrane; and
(III) Irradiating the polymeric membrane with electron beam.

Furthermore, the present disclosure relates to certain uses in applications in filtration applications of liquid media and as barrier to remove particles and microorganisms from liquids and gases. These applications comprise the purification of biopharmaceuticals and chemical pharmaceuticals, water, blood and beverages.

**Detailed Description**

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. It should be noted, however, that the use of "comprising" herein also encompasses the term of "consisting of", i.e. the use of "consisting of" in the sense of "consisting only of" is not excluded in the present disclosure per se.

Amounts of ingredients of a composition may be indicated by % by weight (or "% wt". or "wt.-%") unless specified otherwise. The amounts of all ingredients gives 100 % wt unless specified otherwise. If the amounts of ingredients are identified by % mole the amount of all ingredients gives 100% mole unless specified otherwise.

Unless explicitly indicated, all preferred ranges and embodiments may be combined freely.

Parameters as described herein may be determined as described in detail in the experimental section.

The present disclosure provides a polymeric microporous membrane, comprising a modified surface obtained from coating with at least one fluorinated organosilane compound.

This structure, i.e. the modified surface obtained from fluorinated organosilane compounds as described herein, leads to a combination of features desirable for a number of polymeric membranes, in particular with respect to their intended applications. In particular, the polymeric membranes are provided with a stable and chemically inert surface. That is, the surfaces of the polymeric membranes according to the present disclosure exhibit the general properties of a fluorinated or perfluorinated polymer. This includes highly hydrophobic and oleophobic properties as well as an excellent gamma ray compatibility. Accordingly, the membranes as described herein may be sterilized by gamma irradiation making them best suited for the most demanding applications like medical devices. Also, the membranes as described herein may be more cost-efficient then membranes made completely from perfluorinated polymers such as PTFE.

Generally, the membranes according to the present disclosure are porous polymeric membranes selected from sulfone membranes, polyethylene membranes, polypropylene membranes, polyvinylidene difluoride membranes and polyacrylonitrile membranes. Membranes selected from these materials generally exhibit desirable properties such as mechanical stability, chemical resistance as well as easy manufacturing according to processes well-established in the art. Polymeric sulfone membranes are preferably employed in the present disclosure due to their easy manufacture according to the processes as disclosed herein. Preferably, the sulfone polymer constituting the polymeric sulfone membrane is selected from polysulfone, polyethersulfone, polyphenylsulfone, polyarylethersulfone and polyarylsulfone, of which polyethersulfone (PES) and polysulfone are particularly preferred.

It is also preferred that the polymeric membrane further comprises at least one hydrophilic polymer. That is, for example, in addition to the comparatively hydrophobic sulfone polymer, the polymeric membrane may further comprise at least one hydrophilic polymer. This may increase the general hydrophilicity of the surface of the polymeric membrane, which is desirable for many applications. Preferably, the at least one hydrophilic polymer is selected from polyvinylpyrrolidone, polyethylenglycol, polyvinylalcohol, polyglycolmonoester, polysorbitate, carboxymethylcellulose or a modification or copolymer thereof, and any combinations and mixtures thereof. For example, a preferred and advantageous combination of hydrophilic polymer and sulfone polymer is polyvinylpyrrolidone and polyethersulfone polymer (PES). (For example, as the aromatic sulfone polymer in the context of the present disclosure, e.g. polysulfones, polyethersulfones, polyphenylene sulfones, polyarylethersulfones or copolymers or modifications of these polymers or mixtures of

these polymers can be used. Preferably, the sulfone polymer is a polysulfone or a polyethersulfone with the repeating molecular units shown in formulas (I) and (II) as follows:

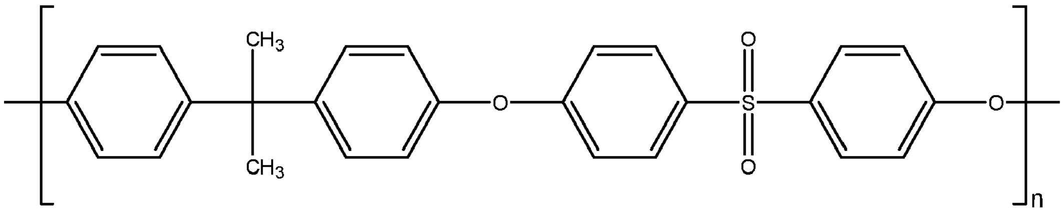

(I)

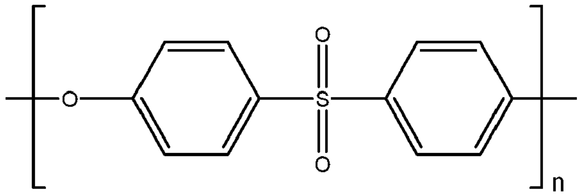

(II)

More preferably, a polyethersulfone according to formula (II) is used because this has lower hydrophobicity than, for example, the polysulfone.

Long-chain polymers are used advantageously as the hydrophilic second polymer that have a good compatibility with the hydrophobic sulfone polymer and have repeating polymer units that are in themselves hydrophilic. Preferred hydrophilic polymers have an average molecular weight $M_w$ of more than 10 000 Daltons. In the method according to the present disclosure, the polymers used as the hydrophilic second polymers have at the same time the function of increasing the viscosity of the homogeneous spinning solution, i.e. of functioning as a thickener, for which reason these polymers are also often called thickeners. In addition to this, these polymers function also as pore-forming agents or nucleating agents during the formation of the membrane structure. Preferably, the hydrophilic second polymer is polyvinylpyrrolidone, polyethylene glycol, polyvinyl alcohol, polyglycol monoester, polysorbitate, such as, e.g., polyoxyethylene sorbitan monooleate, carboxymethylcellulose, or a modification or a copolymer of these polymers. Polyvinylpyrrolidone is especially preferred. It is also possible to use mixtures of different hydrophilic polymers and, in particular, mixtures of hydrophilic polymers with different molecular weights, e.g., mixtures of polymers whose molecular weights differ by a factor of 5 or more. Preferably, the concentration of the hydrophilic second polymer in the membrane according to the present disclosure is in the range of from 0.5 to 7 wt.% relative to the weight of the membrane.

For the modification of the surface characteristics of the membranes according to the present disclosure, additives can be used that influence the stability of the membrane, the color, the ability to adsorb or absorb. There are also additives possible that control the charge of the membrane, e.g., that impart anionic or cationic character to the membrane. Preferably, the membrane according to the present disclosure further contains a hydrophilic third polymer that is different from the hydrophilic second polymer and is a hydrophilically modified aromatic sulfone polymer. Due to the presence of such a polymer, the permeability of the membrane as well as its adsorption characteristics are in particular favorably influenced and the membrane has permanent hydrophilic properties, which may manifest themselves in the fact that, among other things, the membrane can be repeatedly steam sterilized and its hydrophilic characteristics remain preserved, essentially unchanged, even after for example 30 sterilization cycles. Preferably, the hydrophilically modified aromatic sulfone polymer is present in the membranes as disclosed herein at a concentration in the range of from 1 to 50 wt.-% relative to the weight of the membrane, whereby the sum of the polymers yields 100 %. Thereby, in the method for producing the preferred membranes as disclosed herein, the polymer component further comprises a hydrophilic third polymer that is different from the hydrophilic second polymer and is a hydrophilically modified aromatic sulfone polymer.

Preferably, the casting solution contains the hydrophilically modified aromatic sulfone polymer homogeneously dissolved at a concentration in the range of from 0.2 to 20 wt.-% relative to the weight of the casting solution.

The hydrophilically modified aromatic sulfone polymer can be of a type in which hydrophilic functional groups are covalently bound to the sulfone polymer. It can also be a copolymer based on a sulfone polymer, in which hydrophilic segments are contained, for example a copolymer made from a sulfone polymer with a hydrophilic polymer like, e.g., polyvinylpyrrolidone or polyethylene glycol. For reasons of compatibility, it is of particular advantage, if the hydrophilically modified aromatic sulfone polymer is based on the hydrophobic first aromatic sulfone polymer, i.e., the membrane structure contains a mixture of a hydrophobic first aromatic sulfone polymer and a hydrophilic modification of this polymer. Good results may be achieved when the hydrophilically modified aromatic sulfone polymer is a sulfonated sulfone

polymer, whereby this sulfonated sulfone polymer has preferably a degree of sulfonation in the range of from 3 to 10 %. Membranes according to the present disclosure that contain a combination of polyethersulfone and sulfonated polyethersulfone have particularly high permeabilities for water and proteins as well as a low tendency for adsorption, e.g. of proteins, and therefore a low tendency for fouling. These properties may also be present in combination with a pH-triggered switching of properties, believed to be due to the presence of the at least one amino moiety.

The polymeric membranes as described herein have a first and a second surface and a wall extending between the first and second surface as well as pores on the first and second surfaces and throughout the wall. Thus, the polymeric membranes are preferably porous membranes and can either be flat sheet membranes or hollow-fibre membranes. Preferably, the membranes according to the present disclosure are flat sheet membranes.

The membranes according to the present disclosure comprise a modified surface. The modified surface is obtained coating the aforementioned membrane with fluorinated organosilane compounds and securing these compounds onto the membrane surface by means of electron beam. Preferably, the fluorinated organosilane compound comprises at least one fluorinated polyether moiety. It is further preferred that the fluorinated organosilane compound comprises at least one perfluorinated polyether moiety. Preferably, the fluorinated organosilane compound comprises

(a) at least one organosilane moiety;
(b) at least one fluorinated moiety and/or at least one fluorinated alkyl and/or at least one fluorinated alkoxy moiety.

In this regard, it is preferred that wherein the fluorinated organosilane compound is a compound according to formula (1)

$$Rf^1\text{-}[\text{-}Q\text{-}SiY_{3\text{-}x}\text{-}R^1{}_x]_y \qquad \text{formula (1)}$$

wherein $Rf^1$ represents a monovalent or divalent polyfluoropolyether group,
Q represents an organic divalent linking group,
$R^1$ represents a $C_1$-$C_4$ alkyl group,
Y represents a hydrolysable group;
x is 0 or l and y is 1 or 2.

The monovalent or divalent polyfluoropolyether group Rf in the above formula 1, representing the fluorinated polyether silane, can include linear, branched, and/or cyclic structures, that may be saturated or unsaturated. It is preferably a perfluorinated group (i.e., all C-H bonds are replaced by C-F bonds). More preferably, it includes perfluorinated repeating units selected from the group of 10-$(C_nF_{2n})$-,-$(C_nF_{2n}O)$-,-(CF(Z))-,-(CF(Z)O)-,-$(CF(Z)C_nF_{2n}O)$_'-$(C_nF_{2n}CF(Z)O)$-,-$(CF_2CF(Z)O)$-, and combinations thereof In these repeating units Z is a perfluoroalkyl group, an oxygen-substituted perfluoroalkyl group, a perfluoroalkoxy group, or an oxygen-substituted perfluoroalkoxy group, all of which can be linear, branched, or cyclic, and preferably have about I to about 9 carbon atoms and 0 to about 4 oxygen atoms. 15 Examples of polyfluoropolyethers containing polymeric moieties made of these repeating units are disclosed in U.S. Pat. No. 5,306,758 (Pellerite). For the monovalent polyfluoropolyether group (wherein y is 1 in formula I above), the terminal groups can be $(CnF_{2n+l})$-, $(CnF_{2n+1}0)$-or $(X'C_nF_{2n}O)$-, wherein X is H, Cl, or Br, for example. Preferably, these tenninal groups are perfluorinated. In these repeating units or terminal groups, n is 1 20 or more, and preferably I to 4. Preferred approximate average structures for a divalent perfluoropolyether group include $CF_2O(CF_2O)$ $m(C_2F_4O)pCF_2$-, wherein an average value for m and p is 0 to 50, with the proviso that m and p are not simultaneously 0, 25-$CF(CF_3)$ $0(CF(CF_3)CF_20)$ $pCF(CF_3)$-,-$CF_20(C_2F_4O)pCF_2$-, and-$(CF_2)_{30}(C_4F_gO)p(CF_2)_3$-, wherein an average value for p is 3 to 50. Of these, particularly preferred approximate average structures are -$CF_{20}(CF_2O)m(C_2F_4O)_pCF_2$-,-$CF_2O(C_2F_4O)$ $pCF_2$-, and -$CF(CF_3)0(CF(CF_3)CF_{20})_pCF(CF_3)$-. Particularly preferred approximate average structures for a monovalent perfluoropolyether group include 30 $C_3F_{70}(CF(CF_3)CF_2O)_pCF(CF+$ and $CF_{30}(C_2F_{40})_pCF_2$- wherein an average value for p is 4 to 50. As synthesized, these compounds typically include a mixture of polymers. The approximate average structure is the approximate average of the mixture of polymers.

The divalent linking group Q can include linear, branched, or cyclic structures, that may be saturated or unsaturated. The group Q can contain one or more heteroatoms (e.g., oxygen, nitrogen, or sulfur) or functional groups (e.g., carbonyl, amido, urethanylene or sulfonamido). It can also be substituted with halogen atoms, preferably, fluorine atoms, although this is less desirable, as this might lead to instability of the compound.

Preferably, the divalent linking group Q is a hydrocarbon group, preferably, a linear hydrocarbon group, optionally containing heteroatoms or functional groups, and more preferably, containing at least one functional group. Examples of Q groups include-$C(O)NH(CH_2)_3$-,-$CH_20(CH_2)_3$-,-$CH_20C(O)N(R)(CH_2)_3$-, wherein R is H or lower alkyl group, and-$(CnH_{2n})$-, wherein n is about 2 to about 6. A preferred linking group Q is-$C(O)NH(CH_2)_3$-.

Y represents a hydrolyzable group in formula (1) such as for example a halide, a $C_1$-$C_4$ alkoxy group, an acyloxy group or a polyoxyalkylene group, such as polyoxyethylene groups as disclosed in US 5,274,159. Specific examples of hydrolysable groups include methoxy, ethoxy and propoxy groups, chlorine and an acetoxy group.

Compounds of formula I suitable for compositions for treating substrates of the present invention have a molecular weight (number average) of at least about 200, and preferably, at least about 1000. Preferably, they are no greater than about 10000.

Examples of preferred fluorinated silanes include, but are not limited to, the following approximate average structures: $XCF_20(CF_20)m(C_2F_40)_pCF_2X$, $C_3F_70(CF(CF_3)CF_20)_pCF(CF_3)X$, $XCF(CF_3)$ $0(CF(CF_3)$ $CF_20)_pCF(CF_3)X$, $XCF_20(C_2F_40)pCF2X$, and $CF_30(C_2F_40)_pCF_2X'$ $X(CF_2)$ $30(C_4F_80)$ $p(CF_2)_3X$, wherein -X is-Q-$SiY_3$.,R,,' as defined above in formula 1 or a nonsilane-containing terminal group as defined above (($CnF_{2n+1}$)-, ($CnF_{2n+10}$)-or ($X'C_nF_{2n}O$)-wherein X is H, Cl, or Br), with the proviso that at least one X group per molecule is a silane). Preferably, in each fluorinated polyether silane, Q contains a nitrogen atom. More preferably, at least one X group per molecule is $C(O)NH(CH_2)_3Si(OR)_3$ (wherein R is methyl, ethyl, polyethyleneoxy or mixtures thereof), and the other X group, if not a silane, is OCF3, or OC3F7. The values of in and p in these approximate average structures can vary. Preferably, an average value of in is within a range of about I to about 50, and an average value of p is within a range of about 4 to about 40. As these are polymeric materials, such compounds exist as mixtures upon synthesis, which are suitable for use.

These mixtures may also contain perfluoropolyether chains bearing no functional groups (inert fluids) or more than two terminal groups (branched structures) as a consequence of the methods used in their synthesis. Typically, mixtures of polymeric materials containing less than about 10% by weight of nonfunctionalized polymers (e.g., those without silane groups) can be used. Furthermore, mixtures of any of the individually listed compounds of formula I can be used.

The compounds of formula 1 can be synthesized using standard techniques. For example, commercially available or readily synthesized perfluoropolyether esters can be combined with a functionalized alkoxysilane, such as a 3-aminopropylalkoxysilane, according to U.S. Pat. No. 3,810,874 (Mitsch et al.). Modifications of this method are described in the Examples. Such materials may or may not need to be purified before use in a treatment composition.

Similarly, it is also preferred that the fluorinated organosilane compound is a compound according to formula (2)

$$Rf\{-X-[Si(Y)_{3-x}(R)_x]_y\}_z \qquad \text{formula (2)}$$

wherein

- Rf is a polyfluoropolyether group;
- X is a divalent or trivalent organic linking group;
- each Y is independently halogen, alkoxy, hydroxyl, acyloxy, polyalkyleneoxy, or aryloxy;
- x is 0 or 1 or 2;
- y is a value from 1 to 8; and
- z is 1 or 2.

Preferably, the fluorinated organosilane compound is represented by formula (3)

$$Rf\{Q-X'-[Si(Y)_{3-x}(R)_x]_y\}_z \qquad \text{formula (3)}$$

wherein

- Q is a bond, -C(O)-N(R')-, -C(O)-O-, or -$SO_2$N(R')-, wherein R' is hydrogen or alkyl having up to 4 carbon atoms; and
- X' is a divalent or trivalent organic linking group comprising at least one of alkylene or arylalkylene, each of which is optionally interrupted by at least one functional group that is independently ether, thioether, sulfone, amine, ester, amide, carbamate, or urea.

Therein, it is preferred that Q is -C(O)-N(R')-, wherein X' is divalent or trivalent alkylene that is optionally at least one of interrupted by at least one functional group that is independently ether, ester, carbamate, or amino. Also, it is preferred that X' is

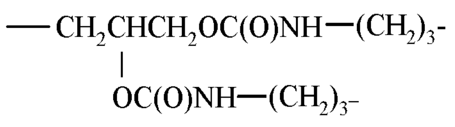

or

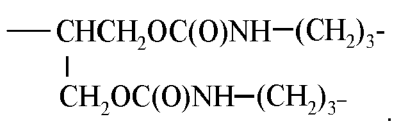

.

Preferably, the fluorinated organosilane compound is represented by formula (4)

$$(R^3)_2N\text{-}R^1\text{-}[Si(Y)_p(R^2)_{3\text{-}p}]_q \qquad \text{formula (4)}$$

wherein

$R^1$ is a multivalent alkylene group optionally interrupted by one or more - O- groups or up to three -$NR^3$- groups;
$R^2$ is alkyl or arylalkylenyl;
each $R^3$ is independently hydrogen, alkyl, arylalkylenyl, or -$R^1$-[$Si(Y)_p(R^2)_{3-p}$];
Y is alkoxy, acyloxy, aryloxy, polyalkyleneoxy, halogen, or hydroxyl;
p is 1, 2, or 3; and
q is 1, 2, or 3,

with the provisos that at least two independently selected -$Si(Y)_p(R^2)_{3-p}$ groups are present and that both $R^3$ groups may not be hydrogen. Preferably, one $R^3$ is alkyl or hydrogen, and the other $R^3$ is -$R^1$-[$Si(Y)_p(R^2)_{3-p}$]. Rf in any one of formulae (2), (3) and (4) preferably comprises perfluorinated repeating units comprising at least one of -($C_nF_{2n}O$)-, -(CF(Z)O)-, -(CF(Z)$C_nF_{2n}O$)-, or -($C_nF_{2n}$CF(Z)O)-; and wherein Z is a perfluoroalkyl group or a perfluoroalkoxy group, each of which is optionally interrupted by at least one ether linkage, and n is an integer from 1 to 12. Preferably, z is 2, and Rf is

$$-CF_2O(CF_2O)_m(C_2F_4O)_bCF_2-,\ -CF_2O(C_2F_4O)_bCF_2-,$$

$$-(CF_2)_3O(C_4F_8O)_b(CF_2)_3-,$$

or

$$-CF(CF_3)-(OCF_2CF(CF_3))_bO-Rf'-O(CF(CF_3)CF_2O)_bCF(CF_3)-,$$

and wherein Rf' is a perfluoroalkylene group optionally interrupted by at least one ether or amine linkage, m is 1 to 50, and b is 3 to 40.

Preferably, in any one of formulae (2), (3) and (4), Rf is $C_3F_7O(CF(CF_3)CF_2O)_aCF(CF_3)$-, $C_3F_7O(CF_2CF_2CF_2O)_aCF_2CF_2$-, or $CF_3O(C_2F_4O)_aCF_2$-, wherein "a" has an average value of 3 to 50, and wherein z is 1.

The modified membrane according to the present disclosure is obtained from coating the membrane with the fluorinated organosilane compounds as described herein and curing said monomers with electron beam. Using electron beam irradiation for curing or grafting the fluorinated organosilane compounds onto the polymeric membrane surface has the advantage that much less energy is required for curing than for e.g. thermal curing. Furthermore, curing with electron beam is carried out at much lower temperatures than thermal curing. This is of particular importance as many polymeric materials used in polymeric membranes cannot withstand higher temperatures. Also, heating up to higher temperatures may already alter the delicate porous membrane structure, which is generally not desirable.

The modified surface of the polymeric membranes as disclosed herein may extend over the first and/or second surface, and over the walls and pores throughout the wall of at least 50 %, preferably of at least 60 %, more preferably of at least 70 % and even more preferably of at least 80 % of the thickness of the wall, starting from the first surface and/or the second surface. That is, the modified surface as described herein preferably does not only cover the first or second surface of the polymeric membrane, but also extends into the pores of the wall between those surfaces. This has the advantage that a larger part of the total surface of the porous membrane is covered by the modified surface. The larger the part of the total surface of the porous membrane is covered by the modified surface, the more pronounced the advantages as described herein. Thus, it is preferred that the modified surface extends over the pores throughout the wall over a thickness of at least 50 %, preferably of at least 60 %, more preferably of at least 70 % and even more preferably of at least 80 % of the thickness of the wall, or of a thickness greater than 35 $\mu$m, preferably greater than 50 $\mu$m, more preferably greater than 75 $\mu$m, and even more preferably greater than 95 $\mu$m of the thickness of the wall, starting from the first surface and/or from the second surface. For example, in the case of a flat sheet membrane, the modified surface extends over the first surface and over the pores throughout the wall of at least 50 %, preferably of at least 60 %, more preferably of at least 70 % and even more preferably of at least 80 % of the thickness of the wall, or of at least 25 $\mu$m of the thickness of the wall, preferably greater than 35 $\mu$m, preferably greater than 50 $\mu$m, more preferably greater than 75 $\mu$m, and even more preferably greater than 95 $\mu$m of the thickness of the wall, starting from the first surface. In this regard, it is preferred that the modified surface extends over at least 5 %, preferably at least 10 %, more preferably at least 20 %, and even more preferably at least 30 % of the second surface.

More preferably, the modified surface may extend over the first surface, over the pores throughout the complete

thickness of the wall, and over at least part of the second surface of the wall. For example, in the case of a commonly used porous PES flat-sheet membrane having a thickness of about 110 μm, the modified surface may extend over the first and second surfaces as well as over the complete thickness of the wall extending between the first and second surfaces.

The present disclosure further provides a process for producing a surface-modified polymeric membrane, comprising the following steps:

(I) Providing a polymeric membrane;
(II) Applying a solution comprising the at least one fluorinated organosilane compound to the polymeric membrane; and
(III) Irradiating the polymeric membrane with electron beam.

Therein, the fluorinated organosilane compound as disclosed herein for the polymeric membranes as described herein are used in the processes according to the present disclosure. This also applies for the polymeric membranes.

In step (III), irradiation with electron beam is carried out. This both cures the fluorinated organosilane compound, i.e. bonds between monomers are likely be formed, and grafts the fluorinated organosilane compound onto the surface of the polymeric membrane. Using electron beam may also have the effect that not only the surface of the membrane facing the source of irradiation is modified, rather, modification of the surface of the pores extends into the thickness of the membrane and even to the side facing away from the source of irradiation. As source of electron beam (or "e-beam" as commonly used) common e-beam apparatuses as conventionally used for these purposes may be employed in the processes as described herein. Electron beam irradiation may be carried out either directly or indirectly. Direct e-beam curing comprises applying a solution comprising the fluorinated organosilane compound to the polymeric membrane, or immersing the polymeric membrane in such a solution, and then irradiating the membrane covered together with the fluorinated organosilane compound with electron beam. Indirect e-beam irradiation comprises irradiating the polymeric membrane first, and then applying the solution comprising the fluorinated organosilane compound. In the latter case, it is believed that irradiating the polymeric membrane with electron beam generates radicals on the surface of the membrane, which then react with the (meth)acrylate moieties of the fluorinated organosilane compound, thereby effectively grafting the monomers onto the membrane surface. In this regard, it is preferred that electron beam irradiation (be it indirectly or directly as described herein) is carried out under an inert atmosphere. The term "inert atmosphere" as used herein denotes an atmosphere having a very low oxygen content. It is preferred that the oxygen content is below 30 ppm, more preferably below 25 ppm, and more preferably below 20 ppm. Higher oxygen contents may have the disadvantage that side reactions may occur due to the formation of oxygen radicals or of ozone by irradiation of oxygen molecules by electron beam.

Furthermore, it is preferred that irradiating with electron beam is carried out an irradiation dose of a mean value in the range of from 10 to 300 kGy, preferably from 20 to 280 kGy, and more preferably from 40 to 230 kGy. Lower doses were found to yield low surface modification and low weight gain ratios, which is undesirable for manufacturing on industrial scale. Low surface modification also translates in lower hydrophilicity and higher protein binding and may also yield higher extractables, which is also not desirable. On the other hand, while higher doses furnish more surface modification in terms of higher weight gain by grafted (meth)acrylate, this may also affect water permeability of the modified membrane. In addition, for higher doses, no further increase of hydrophilicity (i.e. decreased protein binding) may be found. The doses in the preferred ranges may be achieved by correspondingly actuating the source of irradiation. Alternatively, the membrane and the monomer solution applied thereto may be moved in relation to the source of irradiation at a certain constant speed. For example, the membrane may be placed onto a conveyor belt and then moved under a fixed electron beam generatur at a certain speed, resulting in a certain residual time of the membrane under the electron beam generator and consequently in the desired dose. In this regard, the side of the membrane as described herein facing the irradiation source in the process according to the present disclosure may be called "first side", the side of the membrane facing away the irradiation source may be called "second side" of the membrane. While it is preferred for practical reasons that irradiation is affected only onto one side of a membrane (i.e. the "first side"), irradiation may also be affected onto the other side of the membrane (i.e. the "second side").

Preferably, the method according to the present disclosure comprises an additional step (IV) subjecting the membrane obtained in step (III) to an extracting step to remove residual solvents and additives. Preferably, this extracting step comprises subjecting the membrane to at least one extraction bath. For practical reason, it is preferred that at least one extraction bath comprises water even consists of water. Preferably, the at least one extraction bath may be at ambient temperature, but may also be tempered to a temperature in the range of 20 to 100 °C, preferably in the range of from 25 to 90 °C, more preferably in the range of from 30 to 80 °C.

Similarly, it is preferred that the method as described herein comprises a further step (V) drying the membrane. Drying has the common meaning in the art, i.e. the removal of solvent, in particular water, from the membrane surfaces and/or the membrane pores. Preferably, drying in step (v) comprises exposing the membrane to air having a temperature

in the range of from 25 to 120 °C, preferably in the range of from 35 to 105 °C, and more preferably in the range of from 45 to 95 °C. Means and methods for drying membranes, in particular flat-sheet membranes by exposing the membrane to air having temperatures in the preferred ranges, are known in the art to the skilled person.

Using the fluorinated organosilane compound as described herein and irradiating the membrane with electron beam has the effect that the surface of the polymeric membrane gets modified, i.e. the monomers polymerize and/or get grafted onto the polymeric membrane surface. Formation of the modified surface gives rise to a certain weight gain of the membrane. This weight gain may be determined as described in the experimental section.

The solvent in the solution comprising the monomers as described herein preferably comprises at least one solvent, preferably an organic solvent. Suitable organic solvents include aliphatic alcohols (e.g., methanol, ethanol, and isopropanol); ketones (e.g., acetone, 2-butanone, and 2-methyl-4-pentanone); esters (e.g., ethyl acetate, butyl acetate, and methyl formate); ethers (e.g., diethyl ether, diisopropyl ether, methyl t-butyl ether, 2-methoxypropanol, and dipropyleneglycol monomethylether (DPM)); hydrocarbons such as alkanes (e.g., heptane, decane, and paraffinic solvents); and fluorinated solvents such as partially or fully fluorinated hydrocarbons (e.g., perfluorohexane, perfluorooctane, and pentafluorobutane) and hydrofluoroethers (e.g,. methyl perfluorobutyl ether and ethyl perfluorobutyl ether) and those obtained from 3M Company, St. Paul, Minn., under the trade designation "NOVEC 7100" or "NOVEC 7200". In some embodiments, the organic solvent is methanol, ethanol, isopropanol, or a mixture thereof. In some embodiments, the organic solvent is isopropanol. Preferably, the solution contains the monomers in an amount of at least 1 wt.-%. Lower amounts would result in a slow weight gain during irradiation in the subsequent step, which is not desirable from a process economy in an industrial scale. It is also preferred that the solution contains the monomers in an amount of not higher than 20 wt.-%. Higher amounts may not necessarily lead to a higher weight gain, but may also lead to undesired side reactions. An adversary effect of using higher amounts may be, e.g., water permeation of the membrane reduced to low levels undesired or even unsuitable for many applications of the membrane. In this regard, it is preferred that the solution contains the fluorinated organosilane compound in an amount in the range of from 1 to 20 wt.-%, preferably in the range of from 2 to 18 wt.-%, more preferably in the range of from 4 to 16 wt.-%.

"Applying the solution" comprising the fluorinated organosilane compound as described herein may be carried out by spraying the solution onto the membrane or immersing the membrane in a vessel containing the solution. Preferably, the vessel is a shallow vessel and is suitable for transmitting the actinic irradiation of corresponding wavelengths as described herein. In this regard, it is preferred that the vessel is shallow so that the membrane is immersed in the solution and covered by the solution containing the fluorinated organosilane compound. Diptrays and tablets are preferred examples.

Due to the unique combination of properties of the membranes as described herein, preferably obtained from the method as described herein, the present disclosure further provides a use of the membranes as described herein for filtration processes. This may involve microfiltration, nanofiltration or even ultrafiltration. "Microfiltration", "Nanofiltration" and "ultrafiltration" have the meaning common in the art. Preferably, the use as described herein comprises water purification, filtration in the production of food, filtration in the production of beverages, filtration in the electronics industry, medical filtration and filtration in the biopharmaceutical industry. Preferred uses are hemodialysis, virus filtration, and sterile filtration. Also preferred uses comprise microfiltration sterilizing filters, ultrafiltration clearance filters, but also as a barrier for as a barrier to remove particles and microorganisms from liquids and gases.

The present disclosure may further be exemplified by the following items:

1. A polymeric microporous membrane, comprising a modified surface obtained from coating with at least one fluorinated organosilane compound.

2. The polymeric membrane according to item 1, wherein the membrane is a flat-sheet membrane or a hollow-fiber membrane.

3. The polymeric membrane according to item 2, wherein the polymeric membrane is a flat-sheet membrane.

4. The polymeric membrane according to item 2, wherein the polymeric membrane is a hollow-fiber membrane.

5. The polymeric membrane according to any one of the preceding items, wherein the polymeric membrane is selected from polymeric sulfone membranes, polyethylene membranes, polypropylene membranes, polyvinylidene difluoride membranes and polyacrylonitrile membranes.

6. The polymeric membrane according to item 5, wherein the polymeric membrane is a polymeric sulfone membrane.

7. The polymeric membrane according to item 6, wherein the polymeric sulfone is selected from polysulfone, polyethersulfone, and polyarylsulfone.

8. The polymeric membrane according to item 7, wherein the polymeric sulfone is polyethersulfone.

9. The polymeric membrane according to any one of the preceding items, wherein the fluorinated organosilane compound comprises at least one fluorinated polyether moiety.

10. The polymeric membrane according to any one of the preceding items, wherein the fluorinated organosilane compound comprises at least one perfluorinated polyether moiety.

11. The polymeric membrane according to any one of the preceding items, wherein the fluorinated organosilane compound comprises

(a) at least one organosilane moiety;
(b) at least one fluorinated moiety and/or at least one fluorinated alkyl and/or at least one fluorinated alkoxy moiety.

12. The polymeric membrane according to any one of the preceding items, wherein the fluorinated organosilane compound is a compound according to formula (1)

$$Rf^1\text{-}[\text{-}Q\text{-}SiY_{3-x}\text{-}R^1_x]_y \qquad \text{formula (1)}$$

wherein $Rf^1$ represents a monovalent or divalent polyfluoropolyether group,
Q represents an organic divalent linking group,
$R^1$ represents a $C_1$-$C_4$ alkyl group,
Y represents a hydrolysable group;
x is 0 or I and y is 1 or 2.

13. The polymeric membrane according to item 12, wherein in formula (1), $Rf^1$ comprises linear, branched, and/or cyclic structures, that may be saturated or unsaturated.

14. The polymeric membrane according to item 12 or item 13, wherein in formula (1), $Rf^1$ is a perfluorinated group.

15. The polymeric membrane according to any one of items 11 to 14, wherein in formula (1), $Rf^1$ comprises perfluorinated repeating units selected from the group of 10-$(C_nF_{2n})$-,-$(C_nF_{2n}O)$-,-(CF(Z))-,-(CF(Z)O)-,-$(CF(Z)C_nF_{2n}O)$_'-$(C_nF_{2n}CF(Z)O)$-,-$(CF_2CF(Z)O)$-, and combinations thereof.

16. The polymeric membrane according to item 15, wherein Z is a perfluoroalkyl group, an oxygen-substituted perfluoroalkyl group, a perfluoroalkoxy group, or an oxygen-substituted perfluoroalkoxy group, all of which can be linear, branched, or cyclic, and preferably have 1 to 9 carbon atoms and 0 to 4 oxygen atoms.

17. The polymeric membrane according to any one of items 11 to 16, wherein Q comprises linear, branched, or cyclic structures, that may be saturated or unsaturated.

18. The polymeric membrane according to item 17, wherein Q is a hydrocarbon group, preferably, a linear hydrocarbon group, optionally containing heteroatoms or functional groups, and more preferably, containing at least one functional group.

19. The polymeric membrane according to any one of items 11 to 18, wherein Y is selected from a halide, a $C_1$-$C_4$ alkoxy group, an acyloxy group or a polyoxyalkylene group, such as polyoxyethylene groups.

20. The polymeric membrane according to item 19, wherein Y is selected from methoxy, ethoxy and propoxy groups, chlorine and an acetoxy group.

21. The polymeric membrane according to any one of items 11 to 20, wherein the organosilane compounds according to formula (1) exhibit a number average molecular weight of at least, and preferably of at least 1000.

22. The polymeric membrane according to any one of items 11 to 21, wherein the organosilane compounds according to formula (1) exhibit a number average molecular weight of up to 10000.

23. The polymeric membrane according to any one items 1 to 10, wherein the fluorinated organosilane compound according to formula (2)

$$Rf\{-X-[Si(Y)_{3-x}(R)_x]_y\}_z \qquad \text{formula (2)}$$

wherein

Rf is a polyfluoropolyether group;
X is a divalent or trivalent organic linking group;
each Y is independently halogen, alkoxy, hydroxyl, acyloxy, polyalkyleneoxy, or aryloxy;
x is 0 or 1 or 2;
y is a value from 1 to 8; and
z is 1 or 2.

24. The polymeric membrane according to item 23, wherein the fluorinated organosilane compound is represented by formula (3)

$$Rf\{Q-X'-[Si(Y)_{3-x}(R)_x]_y\}_z \qquad \text{formula (3)}$$

wherein

Q is a bond, -C(O)-N(R')-, -C(O)-O-, or $-SO_2N(R')-$, wherein R' is hydrogen or alkyl having up to 4 carbon atoms; and
X' is a divalent or trivalent organic linking group comprising at least one of alkylene or arylalkylene, each of which is optionally interrupted by at least one functional group that is independently ether, thioether, sulfone, amine, ester, amide, carbamate, or urea.

25. The polymeric membrane according to item 24, wherein Q is -C(O)-N(R')-, wherein X' is divalent or trivalent alkylene that is optionally at least one of interrupted by at least one functional group that is independently ether, ester, carbamate, or amino.

26. The polymeric membrane according to item 25, wherein X' is

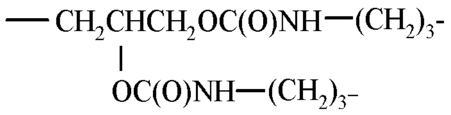

or

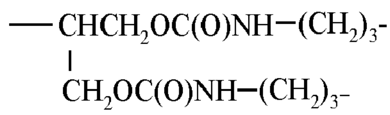

.

27. The polymeric membrane according to any one of items 23 to 26, wherein the fluorinated organosilane compound is represented by formula (4)

$$(R^3)_2N-R^1-[Si(Y)_p(R^2)_{3-p}]_q \qquad \text{formula (4)}$$

wherein

$R^1$ is a multivalent alkylene group optionally interrupted by one or more - O- groups or up to three $-NR^3-$ groups;
$R^2$ is alkyl or arylalkylenyl;
each $R^3$ is independently hydrogen, alkyl, arylalkylenyl, or $-R^1-[Si(Y)_p(R^2)_{3-p}]$;
Y is alkoxy, acyloxy, aryloxy, polyalkyleneoxy, halogen, or hydroxyl;
p is 1, 2, or 3; and
q is 1, 2, or 3,
with the provisos that at least two independently selected $-Si(Y)_p(R^2)_{3-p}$ groups are present and that both $R^3$ groups may not be hydrogen.

28. The polymeric membrane according to item 27, wherein one $R^3$ is alkyl or hydrogen, and the other $R^3$ is $-R^1-[Si(Y)_p(R^2)_{3-p}]$.

29. The polymeric membrane according to any one of items 23 to 28, wherein Rf comprises perfluorinated repeating

units comprising at least one of $-(C_nF_{2n}O)-$, $-(CF(Z)O)-$, $-(CF(Z)C_nF_{2n}O)-$, or $-(C_nF_{2n}CF(Z)O)-$; and wherein Z is a perfluoroalkyl group or a perfluoroalkoxy group, each of which is optionally interrupted by at least one ether linkage, and n is an integer from 1 to 12.

30. The polymeric membrane according to item 29, wherein z is 2, and Rf is

$-CF_2O(CF_2O)_m(C_2F_4O)_bCF_2-$, $-CF_2O(C_2F_4O)_bCF_2-$,

$-(CF_2)_3O(C_4F_3O)_b(CF_2)_3-$,

or

$-CF(CF_3)-(OCF_2CF(CF_3))_bO-Rf'-O(CF(CF_3)CF_2O)_bCF(CF_3)-$,

and wherein Rf' is a perfluoroalkylene group optionally interrupted by at least one ether or amine linkage, m is 1 to 50, and b is 3 to 40.

31. The polymeric membrane according to any one of items 23 to 29, wherein Rf is $C_3F_7O(CF(CF_3)CF_2O)_aCF(CF_3)-$, $C_3F_7O(CF_2CF_2CF_2O)_aCF_2CF_2-$, or $CF_3O(C_2F_4O)_aCF_2-$, wherein "a" has an average value of 3 to 50, and wherein z is 1.

32. A process for producing a surface-modified polymeric membrane, comprising the following steps:

(IV) Providing a polymeric membrane;
(V) Applying a solution comprising at least one fluorinated organosilane compound according to any one of the preceding items to the polymeric membrane; and
(VI) Irradiating the polymeric membrane with electron beam.

33. The process according to item 32, wherein irradiating with actinic radiation is carried out an irradiation dose of a mean value in the range of from 10 to 300 kGy, preferably in the range of from 20 to 280 kGy, more preferably in the range of from 30 to 250 kGy, even more preferably from 40 to 230 kGy.

34. The process according to item 32 or 32, wherein electron beam irradiation is carried out directly or indirectly.

35. The process according to item 34, wherein electron beam irradiation is carried out directly, wherein electron beam irradiation is carried out after application of the hydrophilic monomer solution to the polymeric membrane.

36. The process according to item 35, wherein electron beam irradiation is carried out indirectly, wherein electron beam irradiation is carried out before application of the hydrophilic monomer solution to the polymeric membrane.

37. The process according to any one of items 37 to 41, wherein the polymeric membrane is selected from polymeric sulfone membranes, polyethylene membranes, polypropylene membranes, polyvinylidene difluoride membranes and polyacrylonitrile membranes.

38. The process according to any one of items 32 to 37, wherein the polymer of the polymeric membrane is selected from polymeric sulfone.

39. The process according to item 38, wherein the wherein the polymeric sulfone is selected from polysulfone, polyethersulfone, and polyarylsulfone.

40. The process according to any one of items 32 to 39, wherein the polymeric membrane is selected from hollow-fiber membranes and flat-sheet membranes.

41. The process according to item 40, wherein the polymeric membrane is a hollow-fiber membrane.

42. The process according to item 40, wherein the polymeric membrane is a flat-sheet membrane.

43. The process according to any one of items 32 to 42, wherein the solution in step (V) comprises at least one solvent.

44. The process according to item 43, wherein the solvent is selected from aliphatic alcohols such as methanol, ethanol, and isopropanol, ketones such as acetone, 2-butanone, and 2-methyl-4-pentanone, esters such as ethyl acetate, butyl acetate, and methyl formate, ethers such as diethyl ether, diisopropyl ether, methyl t-butyl ether, 2-methoxypropanol, and dipropyleneglycol monomethylether (DPM), hydrocarbons such as alkanes, such as heptane, decane, and paraffinic solvents, and/or fluorinated solvents such as partially or fully fluorinated hydrocarbons such as perfluorohexane, perfluorooctane, and pentafluorobutane, and/or hydrofluoroethers such as methyl perfluorobutyl ether and ethyl perfluorobutyl ether, and any mixtures and combinations thereof.

45. The process according to any one of items 32 to 44, wherein the solution comprises the at least one fluorinated organosilane compound in an amount of at least 0.1 wt.-%, preferably of at least 0.5 wt.-%, and more preferably of at least 1 wt.-%, based on the total weight of the solution.

46. The process according to any one of items 32 to 45, wherein the solution comprises the at least one fluorinated organosilane compound in an amount of up to 20 wt.-%, preferably of up to 15 wt.-%, and more preferably of up to 12 wt.-%, based on the total weight of the solution.

47. The process according to any one of items 32 to 46, wherein the solution comprises the at least one fluorinated organosilane compound in an amount in the range of from 0.1 wt.-% to 20 wt.-%, preferably of from 0.5 wt.-% to 15 wt.-%, and more preferably of from 1 wt.-%, based on the total weight of the solution.

48. Use of the polymeric membrane according to any one of items 1 to 36 for filtration of aqueous media or as a barrier to remove particles and microorganisms from liquids and gases.

49. Use according to item 48, wherein the use comprises microfiltration, nanofiltration or ultrafiltration of aqueous media.

50. Use according to item 48 or item 49, wherein the use comprises water purification, filtration in the production of food, filtration in the production of beverages, filtration in the electronics industry, medical filtration and filtration in the biopharmaceutical industry.

51. Use according to item 50, wherein the use is selected from microfiltration sterilizing filters and ultrafiltration viral clearance filters.

## Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

## Test Methods

### Weight Gain

The weight gain of each sample after performing e-beam-grafting is calculated according to the following formula:

$$\text{Weight gain} = (\text{Weight after grafting} - \text{Weight before grafting})/\text{Weight before grafting}) \times 100$$

The weight gain value represents the amount of fluorinated silane compound grafted on the membrane surface.

### Maximum separating pore:

The diameter of the maximum separating pore is determined by means of the bubble point method (ASTM No. 128-99 and F 316-03), for which the method described in DE-A-36 17 724 is suitable. Thereby, $d_{max}$ results from the vapor pressure $P_B$ associated with the bubble point according to the equation

$$d_{max} = \sigma_B / P_B$$

where $\sigma_B$ is a constant that is primarily dependent on the wetting liquid used during the measurement. For IPA, $\sigma_B$ is 0.61 μm·bar at 25°C.

Gas permeability test

The cell is clamped in the sample-holding device for the $N_2$ measurement. The nitrogen flow measurement is carried out. A test pressure of 2.0 bar (= 3.0 bar absolute) is set via a pressure-reducing valve at the manometer. The signal of the mass flow measuring system is noted down after a stabilization time. The respective sensor selection depends on the flow rate expected.

$$N_2 = \frac{\frac{\Delta V_{total}}{\Delta t}}{\Delta p \times S}$$

with:

$N_2$ = $N_2$ flow in ml/(min*cm$^2$*bar)
$\Delta V_{total}/\Delta t$ = display value in ml/min
$\Delta p$ = test pressure in bar
S = surface of the membrane

Contact angle / Membrane surface energy

The contact angle or wetting angle for porous PES membranes were measured by Fabrikat FM40Mk2 Easy Drop (Krüss). About 10 μL liquid was dropped on the surface of the sample. The liquid drop was adjusted to be clearly observed in the eye lens.

Water Vapor Transmission Rate of Sheet Materials (MVPR)

According to ASTM E 398-09 the water vapor transmission rate is measured under known and carefully controlled conditions to evaluate the water vapor barrier qualities of sheet. Used equipment device: Water Vapor Permeability Tester 650M from Gintronic AG, Switzerland. Prior to performing the test with the membrane samples, the device is calibrated with specific sample cards. The circular test area has a diameter of 180 mm. The test results are reported in [g/m$^2$/24 hrs].

Zeta-potential analysis

The Zeta-potential of a membrane surface is a measure of its surface charge at the solid/fluid interface and was measured with the SurPass electrokinetic analyzer from Anton Paar (Graz, Austria). After cutting the membrane samples into two 20 x 10 mm pieces they were attached to both sample holders of the Adjustable Gap Cell with a double-sided adhesive tape. The gap height between the two samples holders was adjusted to 0.1 μm to form a streaming channel. After filling the system with $10^{-3}$ mol/L potassium chloride solution a pH titration was performed with 0.05 mol/L sodium hydroxide solution starting at pH 3. Then the pH was stepwise increased to 8. The Zeta-potential at each pH step was calculated according to Helmholtz-Smoluchowski equation:

$$\zeta = (DI/DP) \times (\eta/\varepsilon_0 \varepsilon) \times (L/Q)$$

with: $\zeta$ = Zeta-potential, DI/DP = slope of the streaming current against the pressure across the streaming channel, $\varepsilon_0$ = vacuum permittivity, $\varepsilon$ = dielectric constant of the electrolyte solution, L = length of the streaming channel and Q = cross-section of the streaming channel.

Reagents

Table 1: Reagents used in the examples.

The membranes are produced by 3M: MicroPES 2F.

The following fluorinated organosilane compounds were synthesized and used herein.

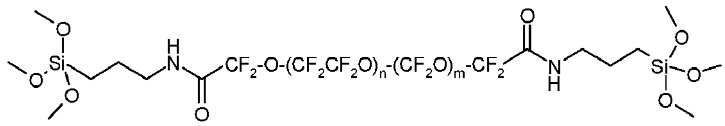

*PFPE-1 (100% solids)*

The preparation of PFPE-1 has been described in US3810874 (example 6, columns 7,8) and US6613860 (example PFPES-1, columns 7,8).

*PFPE-2 (10% solids)*

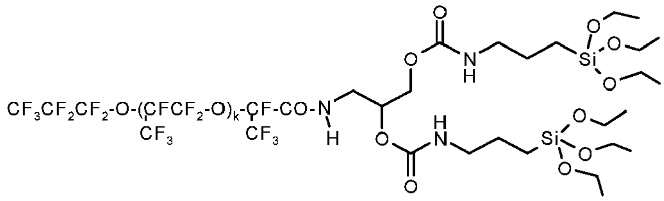

The preparation of PFPE-2 has been described in WO2015142894 (page 27).

Indirect e-beam procedure

All experiments were performed with MicroPES 2F microfiltration flat-sheet membranes (obtained from 3M). E-beam irradiation was carried out by means of the e-beam system from ESI CB-300. The membrane samples were cut into 18 x 25.4 cm pieces and stored in a Polyethylene (PE)-bag. The general procedure for sample surface modification is described as follows. The membrane samples were cut into 18 x 25.4 cm pieces and stored in a Polyethylene (PE)-bag. The general procedure for sample surface modification is described as follows.

The monomer solutions having 10 % monomer content were prepared by dissolving the required amount of pure monomer in deionized water and subsequently degassed with nitrogen. The dry membranes were purged with nitrogen in a glovebox to inert the samples prior to e-beam irradiation. The degassed monomer solutions were stored in the inerted glove box as well. After e-beam irradiation the membrane samples were put into the glovebox again to keep them inerted. The PE-bag was opened and the membrane was then immersed into the monomer solutions. Reaction times of 5, 15, 30 and 45 minutes were used to evaluate if there is an impact of reaction time on the membrane properties. After completion of the grafting reaction the samples were washed three times with deionized water for 15 min each and dried in an oven (30 min at 100 °C). Afterwards the samples were ready for further characterization and stored in PE-bags again.

The monomers used in the grafting examples following the indirect e-beam procedure according to the present disclosure as well as the irradiation doses used are summarized in table 5. Also summarized in table 5 are the results of the experiments, i.e. the weight gain, the amount of bound IgG before and after the extraction protocol, as well as the trans membrane flow (TMF) before and after the extraction protocol. As comparative example 1, a non-modified MicroPES 2F-membrane was used. An also non-modified PTFE membrane was used as comparative example 2.

Table 2: Process parameters and weight gain for indirect e-beam protocol.

| | **Monomer** | **Dose** | **Monomer Concentration (%)** | **Weight gain (%)** |
|---|---|---|---|---|
| **Comp. Ex. 1** | **None** | None | 0 | 0% |
| **Ex. 1** | **PFPE 2** | 100kGy | 5 | 5,6% |
| **Ex. 2** | **PFPE 1** | 100kGy | 5 | 13,9% |
| **Comp. Ex. 1** | **None** | None | 0 | 0% |

The results of the tests regarding various properties of the membranes are set forth in table 3.

Table 3: Test results obtained for membranes of the experiments and comparative experiments.

| | | Comp. Ex. 1 | Ex. 1 | Ex. 2 | Comp. Ex. 2 |
|---|---|---|---|---|---|
| **Contact angle** | air side | 18° ± 1° | 103° ± 13° | 71° ± 11° | 128° ± 4° |
| | roll side | 17° ± 1° | 107° ± 9° | 97° ± 9° | 132° ± 5° |
| **TMF (IPA)** [ml/min*cm$^2$*bar] | | 16.8 ± 0.3 | 15.7 ± 1.0 | 12.8 ± 2.2 | 18.4 |
| **BP (IPA)** [bar] | | 1.40 ± 0.10 | 1.28 ± 0.04 | 1.33 ± 0.01 | 0.39 |
| **$N_2$ Gas Flow** [ml/min*cm$^2$*bar] | | 3214 ± 15 | 3086 ± 52 | 2958 ± 46 | 2858 |
| **Vapor Transfer** [g/m$^2$/24h] | | 4473 ± 23 | 4429 ± 12 | 4600 ± 7 | 4650 ± 15 |

## Claims

1. A polymeric microporous membrane, comprising a modified surface obtained from coating with at least one fluorinated organosilane compound.

2. The polymeric membrane according to claim 1, wherein the polymeric membrane is selected from polymeric sulfone membranes, polyethylene membranes, polypropylene membranes, polyvinylidene difluoride membranes and polyacrylonitrile membranes.

3. The polymeric membrane according to claim 2, wherein the polymeric membrane is a polymeric sulfone membrane.

4. The polymeric membrane according to any one of the preceding claims, wherein the fluorinated organosilane compound comprises at least one perfluorinated polyether moiety.

5. The polymeric membrane according to any one of the preceding claims, wherein the fluorinated organosilane compound comprises

   (a) at least one organosilane moiety;
   (b) at least one fluorinated moiety and/or at least one fluorinated alkyl and/or at least one fluorinated alkoxy moiety.

6. The polymeric membrane according to any one of the preceding claims, wherein the fluorinated organosilane compound is a compound according to formula (1)

   $Rf^1$-[-Q-Si$Y_{3-x}$-$R^1_x$]$_y$ formula (1)

   wherein $Rf^1$ represents a monovalent or divalent polyfluoropolyether group,
   Q represents an organic divalent linking group,
   $R^1$ represents a $C_1$-$C_4$ alkyl group,
   Y represents a hydrolysable group;
   x is 0 or I and y is 1 or 2.

7. The polymeric membrane according to claim 6, wherein in formula (1), $Rf^1$ comprises linear, branched, and/or cyclic structures, that may be saturated or unsaturated.

8. The polymeric membrane according to claim 6 or claim 7, wherein in formula (1), $Rf^1$ comprises perfluorinated repeating units selected from the group of 10-($C_nF_{2n}$)-,-($C_nF_{2n}O$)-,-(CF(Z))-,-(CF(Z)O)-,-(CF(Z)$C_nF_{2n}O$)_'-($C_nF_{2n}$CF(Z)O)-,-($CF_2$CF(Z)O)-, and combinations thereof.

9. The polymeric membrane according to claim 8, wherein Z is a perfluoroalkyl group, an oxygen-substituted perfluoroalkyl group, a perfluoroalkoxy group, or an oxygen-substituted perfluoroalkoxy group, all of which can be linear, branched, or cyclic, and preferably have 1 to 9 carbon atoms and 0 to 4 oxygen atoms.

**10.** The polymeric membrane according to any one of claims 6 to 9, wherein Q comprises linear, branched, or cyclic structures, that may be saturated or unsaturated.

**11.** The polymeric membrane according to any one of claims 6 to 10, wherein Y is selected from methoxy, ethoxy and propoxy groups, chlorine and an acetoxy group.

**12.** The polymeric membrane according to any one claims 1 to 5, wherein the fluorinated organosilane compound according to formula (2)

$$Rf\{-X-[Si(Y)_{3-x}(R)_x]_y\}_z \quad \text{formula (2)}$$

wherein

Rf is a polyfluoropolyether group;
X is a divalent or trivalent organic linking group;
each Y is independently halogen, alkoxy, hydroxyl, acyloxy, polyalkyleneoxy, or aryloxy;
x is 0 or 1 or 2;
y is a value from 1 to 8; and
z is 1 or 2.

**13.** A process for producing a surface-modified polymeric membrane, comprising the following steps:

(I) Providing a polymeric membrane;
(II) Applying a solution comprising at least one fluorinated organosilane compound according to any one of the preceding claims to the polymeric membrane; and
(III) Irradiating the polymeric membrane with electron beam.

**14.** The process according to claim 13, wherein irradiating with actinic radiation is carried out an irradiation dose of a mean value in the range of from 10 to 300 kGy, preferably in the range of from 20 to 280 kGy, more preferably in the range of from 30 to 250 kGy, even more preferably from 40 to 230 kGy.

**15.** The process according to claim 13 or claim 14, wherein the solution comprises the at least one fluorinated organosilane compound in an amount in the range of from 0.1 wt.-% to 20 wt.-%, preferably of from 0.5 wt.-% to 15 wt.-%, and more preferably of from 1 wt.-%, based on the total weight of the solution.

Europäisches Patentamt
European Patent Office
Office européen des brevets

# EUROPEAN SEARCH REPORT

Application Number
EP 19 21 9301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUNEE WONGCHITPHIMON ET AL: "Surface modification of polyvinylidene fluoride--hexafluoropropylene (PVDFHFP) hollow fiber membrane for membrane gas absorption", JOURNAL OF MEMBRANE SCIENCE, ELSEVIER BV, NL, vol. 381, no. 1, 16 July 2011 (2011-07-16), pages 183-191, XP028274020, ISSN: 0376-7388, DOI: 10.1016/J.MEMSCI.2011.07.022 [retrieved on 2011-07-22] * the whole document * ----- | 1-15 | INV. B01D67/00 B01D69/02 B01D71/68 |
| X | SERMPONG SAIRIAM ET AL: "Surface modification of PVDF hollow fiber membrane to enhance hydrophobicity using organosilanes", JOURNAL OF APPLIED POLYMER SCIENCE, vol. 130, no. 1, 5 October 2013 (2013-10-05), pages 610-621, XP055700871, US ISSN: 0021-8995, DOI: 10.1002/app.39197 * the whole document * ----- | 1,2 | TECHNICAL FIELDS SEARCHED (IPC) B01D |
| A | BARAN ONAL-ULUSOY: "Effects of Plasma-Modified Polyvinylidenefluoride and Polyethersulfone Ultrafiltration (UF) Membrane Treatments on Quality of Soybean Oil : Plasma-Modified Membranes for Oil Refining", JOURNAL OF FOOD QUALITY., vol. 38, no. 4, 27 April 2015 (2015-04-27), pages 285-296, XP055626295, US ISSN: 0146-9428, DOI: 10.1111/jfq.12140 * the whole document * ----- -/-- | 1-15 | |

The present search report has been drawn up for all claims

1

| Place of search | Date of completion of the search | Examiner |
|---|---|---|
| Munich | 4 June 2020 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 19 21 9301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHANGSHENG ZHAO ET AL: "Modification of polyethersulfone membranes - A review of methods", PROGRESS IN MATERIALS SCIENCE, vol. 58, no. 1, 1 January 2013 (2013-01-01), pages 76-150, XP055151349, ISSN: 0079-6425, DOI: 10.1016/j.pmatsci.2012.07.002 * Chapter 7 * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 4 June 2020 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9045602 B2
- US 5468390 A
- US 6852769 B2
- US 5306758 A, Pellerite
- US 5274159 A
- US 3810874 A, Mitsch
- DE 3617724 A
- US 6613860 B
- WO 2015142894 A